Europäisches Patentamt

European Patent Office

Office européen des brevets

(11) Veröffentlichungsnummer: **0 026 433**
**B1**

(12) **EUROPÄISCHE PATENTSCHRIFT**

(45) Veröffentlichungstag der Patentschrift:
30.05.84

(51) Int. Cl.³: **H 01 H 31/00, H 01 H 1/38**

(21) Anmeldenummer: 80105703.5

(22) Anmeldetag: 23.09.80

(54) **Last- oder Leistungsschalter.**

(30) Priorität: 26.09.79 DE 2938885

(43) Veröffentlichungstag der Anmeldung:
08.04.81 Patentblatt 81/14

(45) Bekanntmachung des Hinweises auf die Patenterteilung:
30.05.84 Patentblatt 84/22

(84) Benannte Vertragsstaaten:
AT BE CH FR GB IT LI NL SE

(56) Entgegenhaltungen:
EP - A - 0 013 358
CH - A - 355 497
DE - A - 2 644 983
DE - A - 2 744 502
DE - A - 2 759 411
DE - B - 2 232 059
US - A - 4 132 876

(73) Patentinhaber: **Karl Pfisterer Elektrotechnische Spezialartikel GmbH & Co. KG, Augsburger Strasse 375, D-7000 Stuttgart 60 (DE)**

(72) Erfinder: **Höckele, Max, Fichtenstrasse 3, D-7061 Berglen-Steinach (DE)**
Erfinder: **Bäuerle, Gottfried, Postweg 3, D-7012 Fellbach (DE)**
Erfinder: **Müller, Werner, Karlstrasse 17, D-7012 Fellbach (DE)**

(74) Vertreter: **Patentanwälte Phys. Bartels, Dipl.-Ing. Fink Dipl.-Ing. Held, Lange Strasse 51, D-7000 Stuttgart 1 (DE)**

ACTORUM AG

**Beschreibung**

Die Erfindung betrifft einen Last- oder Leistungsschalter, insbesondere für Mittelspannungsnetze, mit einem Isoliergas und mindestens eine Schalteinheit sowie eine Erdungsvorrichtung enthaltenden Schaltergehäuse, durch dessen Wandung hindurch parallel zueinander und im Abstand voneinander angeordnete Betätigungsstangen für die Schalteinheit und die Erdungsvorrichtung geführt sind, wobei die Erdungsvorrichtung für jede Schalteinheit einen neben dieser und parallel zu deren Längsachse angeordneten, in seiner Längsrichtung mittels der Betätigungsstange verschiebbaren Schaltstab sowie ein mittels des Schaltstabes kontaktierbares, ausserhalb der Schalteinheit angeordnetes Erdungskontaktstück aufweist und im geschlossenen Zustand das Erdungskontaktstück mit einem auf Erdpotential liegenden Körper und den übrigen Erdungskontaktstücken elektrisch leitend verbindet.

Bei einem bekannten Schalter dieser Art DE-A1-2 644 983) sind die Betätigungsstangen für die Schalteinheiten und die Erdungsvorrichtung durch je eine sich quer zur Betätigungsrichtung der Schalteinheiten bzw. der Bewegungsrichtung des Erdungskontaktstückes erstreckende, drehbar im Schaltergehäuse gelagerte Wellen gebildet, die seitlich aus dem Schaltergehäuse herausgeführt sind. Im Inneren des Schaltergehäuses sind deshalb Hebegetriebe zur Übertragung der Drehbewegung dieser Wellen auf die Schalteinheiten bzw. die Erdungsvorrichtung notwendig, was sich beträchtlich auf die erforderliche Grösse des Schaltergehäuses auswirkt. Aber auch die Ausbildung der Erdungsvorrichtung ist sowohl im Hinblick auf den Platzbedarf als auch den konstruktiven Aufwand nicht optimal. Ein Träger aus einem elektrisch gut leitenden Material, der an einer Führungsstange festgelegt ist, die mittels des ihr zugeordneten Hebelgetriebes in einer Führung längsverschiebbar ist, trägt nämlich nicht nur die den einzelnen Schalteinheiten zugeordneten Erdungskontaktstücke, sondern ein weiteres, ebenfalls als Kontaktbuchse ausgebildetes Kontaktstück, das ständig einen Steckerstift kontaktiert, der auf Erdpotential gelegt wird.

In der nicht vorveröffentlichten DE-A1-2 854 376 ist zwar bereits ein Last- oder Leistungsschalter beschrieben, bei dem sowohl die Betätigungsstangen für die Schalteinheiten als auch diejenigen für die Erdungsvorrichtungen durch den Deckel des Schaltergehäuses längsverschiebbar hindurchgeführt sind. Die Erdungsvorrichtungen dieses Schalters weisen aber je eine die Erdungskontaktstücke aller demselben mehrphasigen System zugeordneten Schalteinheiten kontaktierende Schiene auf, was ebenfalls keine optimale Ausbildung der Erdungseinrichtung ermöglicht, zumal diese Schienen auch je zwei Kontaktstifte kontaktieren müssen, über welche die Erdung erfolgt.

Der Erfindung liegt die Aufgabe zugrunde, einen Last- oder Leistungsschalter der eingangs genannten Art zu schaffen, der nicht nur hinsichtlich des Antriebes für die Schalteinheit oder Schalteinheiten und die Erdungsvorrichtung, sondern auch hinsichtlich der Ausbildung der Erdungsvorrichtung einen möglichst geringen Raumbedarf hat, dennoch aber konstruktiv einfach ausgebildet ist und sicher die auftretenden Belastungen, insbesondere durch einen im Störfall über die Erdungsvorrichtung fliessenden Strom, beherrscht.

Diese Aufgabe löst ein Last- oder Leistungsschalter mit den Merkmalen des Anspruches 1.

Die längsverschiebbare Führung aller Betätigungsstangen macht Übertragungsgetriebe überflüssig, weil die Bewegung unmittelbar auf die Schalteinheiten bzw. die Erdungsvorrichtung übertragen werden kann. Auch der Aufwand und Raumbedarf für die Erdungsvorrichtung ist auf ein Minimum reduziert, weil die Schaltstäbe nicht nur das zugeordnete Erdungskontaktstück kontaktieren, sondern auch das auf Erdpotential liegende Gegenkontaktstück. Dabei ermöglicht die Ausbildung des vom Schaltstab gebildeten Kontaktkörpers mit wenigstens einem Längsschlitz und federnden Teilen nicht nur eine raumsparende Festlegung des Erdungskontaktstückes an der Aussenseite der zugeordneten Schalteinheit. Sie führt auch zu einer hohen Kontaktqualität, was unter anderem darauf zurückzuführen ist, dass der über einen solchen Kontaktkörper fliessende Strom den Kontaktdruck und damit die Strombelastbarkeit der Kontakte erhöht. Zu guten Kontaktverhältnissen trägt ferner bei, dass durch die längsverschiebbare Führung der Schaltstäbe eine gute Ausrichtung auf das Erdungskontaktstück und das zugeordnete Gegenkontaktstück in einfacher Weise zu erreichen ist.

Es ist zwar bei einer Kontakteinrichtung für einen Schalter bekannt (DE-B2-2 232 059), das als bewegliches Kontaktstück dienende Schaltrohr im Bereich seines einen Endes mit zwei diametral liegenden Längsschlitzen zu versehen. Diese Längsschlitze sind jedoch für den Eingriff von zwei schwenkbaren Kontaktfingern erforderlich, über welche die elektrische Verbindung des Schaltrohres zu einer der beiden Anschlussklemmen des Schalters hergestellt wird. Der andere Endabschnitt des Schaltrohres, der einen das feststehende Kontaktstück bildenden Kontaktbolzen kontaktiert, weist keine Längsschlitze auf.

Eine Ausgestaltung des erfindungsgemässen Schalters gemäss Anspruch 2 ermöglicht es, wirtschaftlich zu fertigende Teile für die Kontaktstücke und den Kontaktkörper zu verwenden. Es ist dabei zur Vermeidung hoher Feldstärken im Inneren des Schaltergehäuses vorteilhaft, die Ausgestaltung des Kontaktkörpers gemäss Anspruch 3 zu wählen.

Um mit möglichst einfachen Mitteln eine präzise Führung der Kontaktkörper zu erzielen, sind diese vorzugsweise gemäss Anspruch 4 ausgebildet.

Die erforderliche Isolierung der Kontaktkörper gegenüber den übrigen, auf einem anderen Potential liegenden Teilen des Schalters erfolgt vorzugsweise durch eine Ausbildung des Schaltstabes gemäss Anspruch 5, wobei es vorteilhaft ist, die Führungen dieses Schaltstabes gemäss Anspruch 6 auszubilden.

Um einerseits gleichzeitig alle Schalteinheiten desselben mehrphasigen Systems erden und kurzschliessen zu können, anderseits trotz einer möglichst einfachen Konstruktion den Kraftaufwand für die Betätigung der Erdungsvorrichtung gering halten zu können, ist bei einer bevorzugten Ausführungsform die Verbindung der Schaltstäbe mit dem Betätigungsstab gemäss Anspruch 7 ausgebildet.

Im folgenden ist die Erfindung anhand eines in der Zeichnung dargestellten Ausführungsbeispiels im einzelnen erläutert. Es zeigt:

Fig. 1 eine aufgebrochen und teilweise im Schnitt dargestellte Ansicht des Ausführungsbeispiels;

Fig. 2 einen Schnitt nach der Linie II–II der Fig. 1;

Fig. 3 einen vergrössert dargestellten Ausschnitt aus Fig. 2;

Fig. 4 einen vergrössert dargestellten Ausschnitt aus Fig. 1.

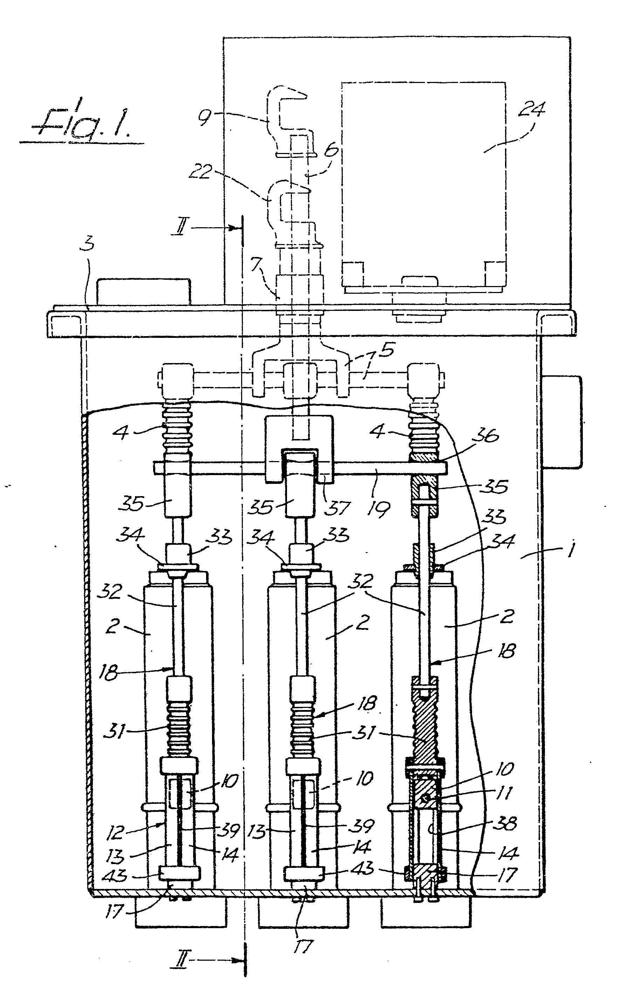

Ein Last- oder Leistungsschalter für ein Mittelspannungsnetz weist ein metallisches, im Ausführungsbeispiel quaderförmiges Schaltergehäuse 1 auf, das im montierten Zustand des Schalters geerdet ist. In diesem Schaltergehäuse, das mit einem nicht unter Überdruck stehenden Isoliergas, beispielsweise $SF_6$-Gas, gefüllt ist, sind mehrere, gleich ausgebildete Schaleinheiten 2 mit lotrecht zum Deckel 3 des Schaltergehäuses 1 stehender Längsachse enthalten. Im Ausführungsbeispiel bilden die Schalteinheiten 2 drei 3phasige Schalter und sind daher in drei zueinander parallelen Reihen angeordnet, wobei die Abstände zwischen den Schalteinheiten derselben Reihe gleich gross sind und die Schalteinheiten jeder Reihe mit denjenigen der übrigen Reihen ebenfalls zueinander parallele Reihen bilden. Das untere Ende jeder Schalteinheit 2 ist fest mit dem Boden des Schaltergehäuses verbunden und als Steckbuchse ausgebildet, in die von der Aussenseite des Schaltergehäuses her ein Kabelstecker eingesteckt werden kann. Durch das obere Ende jeder Schalteinheit 2 ist eine Betätigungsstange 4 herausgeführt, die relativ zur Schalteinheit in zum Deckel 3 lotrechter Richtung verschiebbar ist. Die Betätigungsstangen 4 der zu einer Reihe gehörenden und den drei verschiedenen Phasen zugeordneten Schalteinheiten 2 sind an ihrem oberen Ende an einer Traverse 5 befestigt, an die sich in Verlängerung der mittleren Betätigungsstange 4 eine Schaltstange 6 anschliesst, die lotrecht durch den Deckel 3 und einen auf diesen aufgesetzten Führungs- und Dichtungskörper 7 hindurchgeführt ist. In gleicher Weise sind die Betätigungsstangen 4 der übrigen drei Reihen von Schalteinheiten 2 mit zwei anderen Schaltstangen 6 verbunden, die in einer Reihe hinter der in Fig. 1 sichtbaren Schaltstange liegen. Das obere Ende jeder Schaltstange 6 trägt eine Klaue 9.

An der Aussenseite jeder Schalteinheit 2 ist in gleicher Höhe je ein Erdungskontaktstück 10 angeordnet, das im Ausführungsbeispiel ein mit seiner Längsachse parallel zur Längsachse der Schalteinheit liegender Zylinder ist. Das Erdungskontaktstück 10 wird von einem radial in die Schalteinheit eindringenden Bolzen 11 im Abstand von der Aussenmantelfläche der Schalteinheit gehalten und es ist über den Bolzen 11 mechanisch fest und elektrisch leitend mit dem festen Kontaktstück der Schalteinheit 2 verbunden, das in unmittelbarer Verbindung mit der Steckbuchse der Schalteinheit steht.

Jedem Erdungskontaktstück 10 ist ein Gegenkontaktstück 17 zugeordnet, das an der Innenseite des Bodens des Schaltergehäuses 1 befestigt und durch das Schaltergehäuse geerdet ist. Die gleich ausgebildeten Gegenkontaktstücke 17 haben die gleiche Querschnittsform wie die Erdungskontaktstücke 10, und die Längsachse jedes Gegenkontaktstückes 17 fluchtet mit der Längsachse des zugeordneten Erdungskontaktstückes 10. Der Abstand zwischen dem Erdungskontaktstück 10 und dem zugeordneten Gegenkontaktstück 17 ist für die höchstmögliche, am Erdungskontaktstück 10 liegende Spannung ausreichend gross gewählt. Alle Erdungskontaktstücke 10 und Gegenkontaktstücke 17 der einen 3phasigen Schalter bildenden Schalteinheiten 2 liegen mit ihrer Längsachse in einer gemeinsamen Ebene, die parallel zu der durch diese Schalteinheiten definierten Ebene liegt.

Die Erdungskontaktstücke 10 und die Gegenkontaktstücke 17 bilden Teile je einer jeder Schalteinheit 2 zugeordneten Erdungsvorrichtung. Die gleich ausgebildeten Erdungsvorrichtungen bilden ebenso wie die Schalteinheiten 2 drei zueinander parallele Reihen.

Jeder dieser Erdungsvorrichtungen weist einen parallel zur zugeordneten Schalteinheit 2 angeordneten, längsverschiebbaren, als Ganzes mit 18 bezeichneten Schaltstab auf, dessen Längsachse mit derjenigen des zugeordneten Erdungskontaktstückes 10 fluchtet. Der untere Endabschnitt des Schaltstabes 18 ist als Kontaktkörper 12 ausgebildet, der ständig das zugeordnete Erdungskontaktstück 10 kontaktiert und an seinem oberen Ende mit dem unteren Ende eines Kunststoffisolators 31 verbunden ist, welcher den Mittelabschnitt des Schaltstabes 18 bildet. Das obere Ende des Kunststoffisolators 31 ist mit einem elektrisch isolierenden, im Ausführungsbeispiel aus glasfaserverstärktem Kunststoff bestehenden Rundstab 32 verbunden, der den oberen Endabschnitt des Schaltstabes 18 bildet und längsverschiebbar in einer elektrisch isolierenden Führungsbuchse 33 geführt ist, die von der Verlängerung einer Sammelschiene 34 getragen wird. Die Sammelschienen 34 verbinden alle der gleichen Phase zugehörigen Schalteinheiten 2 und sind an der oberen Stirnseite dieser Schalteinheiten festgelegt. Mit dem oberen Ende jedes Rundstabes 32 ist eine ebenfalls aus einem elektrisch isolierenden Kunststoff bestehende, aufgesetzte Buchse 35 verstiftet, die mit einer sich zu ihren beiden Mündungsöffnungen hin konisch erweiternden Querbohrung 36 (vgl. Fig. 1) versehen ist. Die miteinander fluchtenden Querbohrungen 36 der den zum selben System gehörenden Schalteinheiten 2 zugeordneten Erdungsvorrichtungen nehmen einen eine Traverse bildenden Querstab 19 drehbar auf, der von einem gabelförmigen, die Buchse 35 des mittleren Schaltstabes 18 übergreifenden Verbindungskörper 37 getragen wird, der am unteren Ende einer metallischen Betätigungsstange 21 befestigt ist. Diese Betätigungsstange 21, mit der alle mit dem Querstab 19 gekuppelten Erdungsvorrichtungen gleichzeitig betätigt werden können, ist parallel zur Betätigungsstange 6 der zugeordneten Schalteinheiten durch den Deckel 3 des Schaltergehäuses hindurchgeführt, wobei ein Führungs- und Dichtungskörper 20 für die Führung und die erforderliche Abdichtung sorgt. Wie die Betätigungsstange 6 trägt auch die Betätigungsstange 21 an ihrem oberen Ende eine Klaue 22.

Die beiden Klauen 9 und 22 der zum selben System gehörenden Betätigungsstangen sind wahlweise mit einer schwenkbar auf dem Deckel 3 des Schaltergehäuses montierten Schalterantriebsvorrichtung 24 kuppelbar, wodurch sichergestellt ist, dass die Schalteinheiten 2 nur dann geerdet werden können, wenn der durch sie gebildete Schalter geöffnet ist.

Um einen hochbelastbaren Kontakt zwischen dem Kontaktkörper 12 einerseits und dem Erdungskontaktstück 10 sowie dem Gegenkontaktstück 17 andererseits zu erhalten und dennoch den Kontaktkörper 12 einfach und raumsparend ausbilden zu können, besteht dieser aus zwei Kontaktzungen 12 und 14, die in Querrichtung je entsprechend der Krümmung der Aussenmantelfläche von Erdungskontaktstück und Gegenkontaktstück gekrümmt sind. Diese beiden Kontaktzungen sind durch zwei Längsschlitze 38 und 39 voneinander getrennt, von denen derjenige auf der der Schalteinheit zugekehrten Seite eine so grosse Weite hat, dass er den das Erdungskontaktstück 10 tragenden Bolzen 11 aufnehmen kann. Die beiden Längsschlitze 38 und 39 gestatten ein radiales Federn der Kontaktzungen 13 und 14. Zur Erhöhung des Kontaktdruckes ist im unteren Endabschnitt der Kontaktzungen 13 und 14 auf diese aussen ein zur Schalteinheit 2 hin offener Federring 40 aufgesetzt. Ein zweiter Federring 42 drückt die Kontaktzungen 13 und 14 im Bereich ihres oberen Endes gegeneinander. Um hohe Feldstärken zu vermeiden, wird der auf den unteren Endabschnitt der Kontaktzungen 13 und 14 aufgesetzte Federring 40 von einem metallischen Schirmring 43 abgedeckt, der aussen abgerundet ist und aus zwei halbschalenartigen Stücken zusammengesetzt ist, damit er die radiale Federung der Kontaktzungen und die Verschiebung des Bolzens 11 im Längsschlitz 38 nicht behindert.

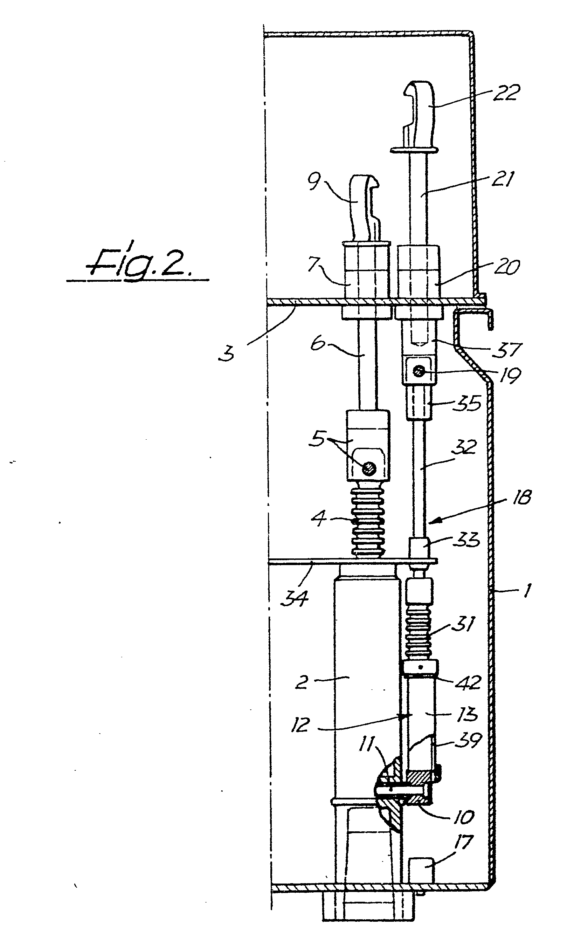

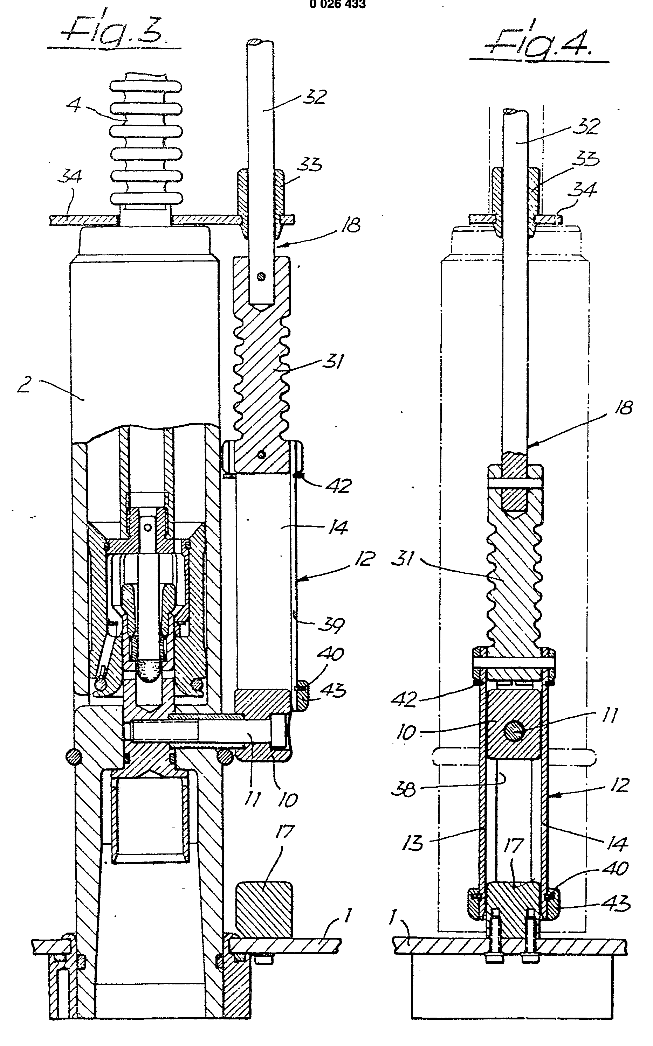

Um die zum selben System gehörenden, einen dreiphasigen Schalter bildenden Schalteinheiten 2 erden zu können, muss sich dieser Schalter im geöffneten Zustand befinden, da nur dann die Klauen 22 der Betätigungsstange 21 für die diesem Schalter zugeordneten Erdungsvorrichtungen mit der Schalterantriebsvorrichtung 24 gekuppelt werden können. Vor der Erdung befinden sich die Erdungsvorrichtungen in der in den Fig. 2 und 3 dargestellten Stellung. Nachdem die Klaue 22 mit der Schalterantriebsvorrichtung 24 gekuppelt ist, kann letztere die Betätigungsstange 21 nach unten bewegen. Hierdurch werden gleichzeitig die mit ihr gekuppelten Schaltstäbe 18 gegen den Boden des Schaltergehäuses 1 hin bewegt. Wegen der gleichen Ausbildung aller Erdungsvorrichtungen kommen bei dieser Bewegung alle Kontaktzungen 13 und 14 gleichzeitig in Kontakt mit dem zugeordneten Gegenkontaktstück 17, das zwischen die Kontaktzungen 13 und 14 eindringt. Am Ende der Schaltbewegung befinden sich die Erdungsvorrichtungen in der in den Fig. 1 und 4 gezeigten Stellung. Sollte wegen eines Fehlers ein Strom über die Kontaktzungen 13 und 14 zum Gegenkontaktstück 17 fliessen, dann wird wegen der Längsteilung des Kontaktkörpers 12 durch die Kräfte des Stromes der Kontaktdruck noch erhöht. Da alle Gegenkontaktstücke 17 auf Erdpotential liegen, werden mittels der Erdungsvorrichtungen nicht nur die einzelnen Schalteinheiten 2 geerdet, sondern auch kurzgeschlossen.

**Patentansprüche**

1. Last- oder Leistungsschalter, insbesondere für Mittelspannungsnetze, mit einem Isoliergas und mindestens eine Schalteinheit (2) sowie eine Erdungsvorrichtung (10, 12, 17, 18) enthaltenden Schaltergehäuse (1), durch dessen Wandung (3) hindurch parallel zueinander und im Abstand voneinander angeordnete Betätigungsstangen (6, 21) für die Schalteinheit (2) und die Erdungsvorrichtung (10, 12, 17, 18) geführt sind, wobei die Erdungsvorrichtung (10, 12, 17, 18) für jede Schalteinheit (2) einen neben dieser und parallel zu deren Längsachse angeordneten, in seiner Längsrichtung mittels der Betätigungsstange (21) verschiebbaren Schaltstab (18) sowie ein mittels des Schaltstabes (18) kontaktierbares, ausserhalb der Schalteinheit (2) angeordnetes Erdungskontaktstück (10) aufweist und im geschlossenen Zustand das Erdungskontaktstück (10) mit einem auf Erdpotential liegenden Körper und den übrigen Erdungskontaktstücken (10) elektrisch leitend verbindet, dadurch gekennzeichnet, dass alle Betätigungsstangen (6, 21) längsverschiebbar geführt sind und dass von jedem Schaltstab (18) zumindest ein Abschnitt als ein wenigstens einen Längsschlitz (38, 39) aufweisender Kontaktkörper (12) ausgebildet ist, dessen federnde Teile (13, 14) zwischen sich das aussen an der zugeordneten Schalteinheit (2) vorgesehene Erdungskontaktstück (10) und im geschlossenen Zustand der Erdungsvorrichtung (10, 12, 17, 18) ein innen am Schaltergehäuse (1) befestigtes Gegenkontaktstück (17) kontaktieren.

2. Schalter nach Anspruch 1, dadurch gekennzeichnet, dass das Erdungskontaktstück (10) und das Gegenkontaktstück (17) zumindest im wesentlichen zylindrische Körper sind, deren Längsachse mit derjenigen des zugeordneten Kontaktkörpers (12) fluchtet, und dass der Kontaktkörper (12) wenigstens zwei in ihrer Querrichtung an die Krümmung des Erdungskontaktstückes (10) und des Gegenkontaktstückes (17) angepasste Kontaktzungen (13, 14) aufweist, die wenigstens an ihrem freien Ende mittels eines Federringes (40) zusammengehalten werden.

3. Schalter nach Anspruch 2, dadurch gekennzeichnet, dass der Federring (40) von einem Schirmring (43) abgedeckt ist, der aus zwei Halbschalen besteht.

4. Schalter nach einem der Ansprüche 1 bis 3, dadurch gekennzeichnet, dass der Kontaktkörper (12) eine im geöffneten Zustand der Erdungsvorrichtung das Kontaktieren des Erdungskontaktstückes (10) gestattende Länge hat.

5. Schalter nach einem der Ansprüche 1 bis 4, dadurch gekennzeichnet, dass der sich an den Kontaktkörper (12) anschliessende Abschnitt des Schaltstabes (18) ein Stabisolator (31) ist, an den sich ein ebenfalls elektrisch isolierender Stab (32) anschliesst, der in einer fest mit der zugeordneten Schalteinheit (2) verbundenen Führungsbuchse (33) längsverschiebbar geführt ist.

6. Schalter nach Anspruch 5, dadurch gekennzeichnet, dass die Führungsbuchse (33) in eine alle Schalteinheiten (2) der gleichen Phase miteinander verbindende Sammelschiene (34) eingesetzt ist.

7. Schalter nach einem der Ansprüche 1 bis 6, dadurch gekennzeichnet, dass der isolierende Abschnitt (31, 32) des Schaltstabs (18) an seinem dem Kontaktkörper (12) abgekehrten Ende mit einer vom Betätigungsstab (21) getragenen und quer zu diesem liegenden Brücke (19) gekuppelt ist, mit der alle demselben mehrphasigen System zugeordneten Erdungsvorrichtungen verbunden sind.

**Claims**

1. Load or power switch, in particular for medium voltage networks, comprising a switch housing (1) containing an insulating gas and at least one switching unit (2) and an earthing device (10, 12, 17, 18), through the wall (3) of which housing extend actuating rods (6, 21) arranged parallel to each other at intervals apart for the switching unit (2) and the earthing device (10, 12, 17, 18), the earthing device (10, 12, 17, 18) for each switching unit (2) having a switching rod (18) arranged adjacent to the switching unit (2) and parallel to the longitudinal axis thereof and displaceable in its longitudinal direction by means of the actuating rod (21) as well as an earthing contact member (10) situated outside the switching unit (2) and arranged so that it may be contacted by the switching rod (18), said device in the closed position electrically connecting the earthing contact member (10) with a body which is at earth potential and with the other earthing contact members (10), characterised in that all actuating rods (6, 21) are supported to be longitudinally displaceable and in that at least one section of each switching rod (18) is in the form of a contact member (12) having at least one longitudinal slot (38, 39), the spring mounted parts (13, 14) of which contact member between them contact the earthing contact member (10) provided on the outside of the associated switching unit (2) and, when the earthing device (10, 12, 17, 18) is in the closed position, contact a counter-contact member (17) fixed to the inside of the switch housing (1).

2. Switch according to claim 1, characterised in that the earthing contact member (10) and the counter-contact member (17) are at least substantially cylindrical bodies whose longitudinal axis is in alignment with that of the associated contact member (12), and in that the contact member (12) has at least two contact tongues (13, 14) which in their transverse direction are adapted to the curvature of the earth contact member (10) and of the counter-contact member (17) and which, at least at their free end, are held together by a spring ring (40).

3. Switch according to claim 2, characterised in that the spring ring (40) is covered by a protective ring (43) consisting of two half shells.

4. Switch according to one of the claims 1 to 3, characterised in that the contact member (12) is of a length enabling it to contact the earthing contact member (10) when the earthing device is in the open position.

5. Switch according to one of the claims 1 to 4, characterised in that the section of switching rod (18) adjacent to the contact member (12) is a rod insulator (31), followed by a rod (32) which is also electrically insulating and which is supported to be longitudinally displaceable in a guide sleeve (33) rigidly connected to the associated switching unit (2).

6. Switch according to claim 5, characterised in that the guide sleeve (33) is inserted in a collecting bar (34) which connects all the switching units (2) of the same phase.

7. Switch according to one of the claims 1 to 6, characterised in that the insulating section (31, 32) of the switching rod (18) is coupled, at its end remote from the contact member (12), to a bridge (19) which is supported by the actuating rod (21) and extends transversely thereto and to which all the earthing devices associated with the same multiphase system are connected.

**Revendications**

1. Interrupteur de charge ou de puissance, notamment pour réseaux à moyenne tension, qui comprend un gaz isolant et au moins une unité de travail (2), ainsi qu'un carter d'interrupteur (1) contenant un dispositif de mise à la terre (10, 12, 17, 18), et à travers la paroi (3) duquel sont passées des tiges d'actionnement (6, 21) prévues pour l'unité de travail (2) et pour le dispositif de mise à la terre (10, 12, 17, 18), disposées parallèlement entre elles et à une certaine distance l'une de l'autre, le dispositif de mise à la terre (10, 12, 17, 18) comprenant, pour chaque unité de travail (2), une barre de commande (18) disposée à côté de cette unité, parallèlement à son axe longitudinal, et pouvant être déplacée en translation dans sa direction longitudinale par la tige d'actionnement (21), ainsi qu'une pièce de contact de mise a la terre (10) avec laquelle on peut établir un contact au moyen de la barre de commande (18) et qui est disposée à l'extérieur de l'unité de travail (2) et ce dispositif (10, 12, 17, 18), connectant la pièce de contact de mise à la terre (10) à un corps placé au potentiel de la terre et aux autres pièces de contact de mise à la terre (10) de façon conductrice de l'électricité, à l'état fermé, caractérisé en ce que toutes les tiges d'actionnement (6, 21) sont guidées mobiles en translation longitudinale et en ce qu'au moins un segment de chaque barre de commande (18) constitue un corps de contact (12) qui présente au moins une fente longitudinale (38, 39), dont les parties à action élastique (13, 14) établissent le contact, entre elles, avec la pièce de contact de mise à la terre (10) prévue extérieurement sur l'unité de travail (2) correspondante et, à l'état fermé du dispositif de mise à la terre (10, 12, 17, 18) établissent le contact avec une pièce de contre-contact (17) fixée intérieurement sur le carter (1) de l'interrupteur.

2. Interrupteur selon la revendication 1, caractérisé en ce que la pièce de contact de mise à la terre (8) et la pièce de contre-contact (17) sont des corps au moins sensiblement cylindriques dont l'axe longitudinal conïcide avec celui du corps de contact (12) correspondant, et en ce que le corps de contact (12) présente au moins deux languettes de contact (13, 14) qui épousent dans leur direction transversale la courbure de la pièce de contact de mise à la terre (10) et de la pièce de contre-contact (17), languettes qui sont maintenues assemblées au moins à leur extrémité libre, au moyen d'une bague élastique (40).

3. Interrupteur selon la revendication 2, caractérisé en ce que la bague élastique (40) est recouverte par une bague écran (49) qui est composée de deux demi-coquilles.

4. Interrupteur selon l'une quelconque des revendications 1 à 3, caractérisé en ce que le corps de contact (12) possède une longueur, qui, dans l'état ouvert du dispositif de mise à la terre, permet d'entrer en contact avec l'élément de contact de mise à la terre (10).

5. Interrupteur selon l'une quelconque des revendications 1 à 4, caractérisé en ce que le segment de la barre de commande (18) qui se raccorde au corps de contact (12) est un isolateur de barre (31) auquel se raccorde une barre (32) également isolante de l'électricité qui est guidée mobile en translation longitudinale dans une douille de guidage (33) rigidement solidaire de l'unité de travail (2) qui lui est associée.

6. Interrupteur selon la revendication 5, caractérisé en ce que la douille de guidage (33) est encastrée dans une barre collectrice (34) qui relie entre elles toutes les unités de travail (2) de la même phase.

7. Interrupteur selon l'une des revendications 1 à 6, caractérisé en ce que le segment isolant (31, 32) de la barre de commande (18) est accouplé, à son extrémité éloignée du corps de contact (12), à une traverse (19) portée par la barre d'actionnement (21), qui s'étend transversalement à celle-ci et à laquelle tous les dispositifs de mise à la terre associés au même système polyphasé sont reliés.

Fig. 1.

_Fig.2._

*Fig.3.*

*Fig.4.*